# EUROPEAN PATENT APPLICATION

(11) **EP 4 388 871 A1**
(43) Date of publication of application: **26.06.2024**
(21) Application number: 23180141.6
(22) Date of filing: 19.06.2023
(51) Int. Cl.: A01K 95/02

(54) **A DEVICE FOR USE IN ANGLING FOR RELEASABLY OR NON-RELEASABLY RETAINING A WEIGHT**

(30) Priority: 21.12.2022 GB 202219358
(71) Applicant: Korda Developments Limited, Basildon, Essex SS14 0HW (GB)
(72) Inventor: Grundy, Richard Allen, Bishop's Stortford, CM23 4HT (GB)
(74) Representative: Burnett, Christopher James

(57) **Abstract**

A device (2) for use in angling for releasably or non-releasably retaining a weight (4), which device (2) comprises:
(i) a body portion (6);
(ii) a receiving formation (8) in the body portion (6); and
(iii) a spring member in the receiving formation (6), and wherein:
(iv) the receiving formation (8) is longitudinally slidable over the spring member (8);
(v) the receiving formation (8) is rotatably slidable over the spring member (10) in order cause the spring member (10) to function in a first mode of use or a second mode of use, and with an angler always being able to choose between the first mode of use or the second mode of use;
(vi) in the first mode of use, the spring member (10) has a first longitudinal position in the receiving formation (8) and which is such as to cause the weight (4) to be retained by the spring member (10);
(vii) in the first mode of use, the spring member (10) has a second longitudinal position in the receiving formation (8) and which is such as to cause the weight (4) to be releasable from the spring member (10); and
(viii) in the second mode of use, both the first and second longitudinal positions of the spring member (10) in the receiving formation (8) are such as to cause the weight (4) to be retained by the spring member (10).

## Description

This invention relates to apparatus for use in angling and, more especially, this invention relates to a device for use in angling for releasably or non-releasably retaining a weight.

During angling, there may be situations where it is appropriate for an angler to release a weight or not to release a weight. For example, during angling, a hooked fish will typically struggle against being landed. During the struggle, a weight used in catching the fish may result in the hook unnecessarily damaging the fish's mouth and/or the weight may remain with the hook in the mouth of the fish if the fish breaks free from a fishing line being used by an angler. In such circumstances, it may be desirable to have a weight which is releasable from a hook. Also, when angling in waters with a lot of weeds, an angler may decide to release a weight that has become entangled in the weeds if releasing the weight will enable other parts of the angling equipment to be retrieved. In other circumstances, the releasing of a weight may be undesirable, for example if the weight is of a potentially poisonous material such as lead, or if it is desired to help prevent a waterbed becoming overloaded with discarded weights.

It is an aim of the present invention to provide a device for use in angling which provides an angler with a choice of releasably or non-releasably retaining a weight.

Accordingly, in one non-limiting embodiment of the present invention there is provided a device for use in angling for releasably or non-releasably retaining a weight, which device comprises:
(i) a body portion;
(ii) a receiving formation in the body portion; and
(iii) a spring member in the receiving formation,
and wherein:
(iv) the receiving formation is longitudinally slidable over the spring member;
(v) the receiving formation is rotatably slidable over the spring member in order to cause the spring member to function in a first mode of use or a second mode of use, and with an angler always being able to choose between the first mode of use or the second mode of use;
(vi) in the first mode of use, the spring member has a first longitudinal position in the receiving formation and which is such as to cause the weight to be retained by the spring member;
(vii) in the first mode of use, the spring member has a second longitudinal position in the receiving formation and which is such as to cause the weight to be releasable from the spring member; and
(viii) in the second mode of use, both the first and second longitudinal positions of the spring member in the receiving formation are such as to cause the weight to be retained by the spring member.

The device of the present invention is advantageous in that an angler is able to choose whether or not to fish such as to releasably retain or non-releasably retain a weight. The angler is thus able to make a choice in dependence upon angling circumstances such as, for example, local fishing conditions, requirements of fishery owners, or fishing competition rules.

The device may be one in which the receiving formation comprises guide means for guiding the receiving formation as the receiving formation slides longitudinally over the spring member in order to cause the spring member to move from the first position to the second position. The use of the guide means may facilitate a smooth yet controlled sliding action as the receiving formation slides over the spring member. The device may be one in which the guide means in the receiving formation comprises a groove, and in which the spring member slides in the groove. Other constructions may be employed for the guide means so that the guide means may be, for example, a track formed by a pair of rows of projecting members.

The device may be one in which the spring member has a first dimension in the first position and a second dimension in the second position, and in which the second dimension is smaller than the first dimension. Alternative constructions may be employed, for example such that the second dimension is larger than the first dimension.

The device may be one in which the receiving formation is a bore which comprises a mouth, a first bore portion of a first diameter extending from the mouth, a second bore portion of a second diameter which extends from the end of the first bore portion remote from the mouth and which has a smaller diameter than the diameter of the first bore, a bore closure portion which closes an end of the second bore position remote from the end of the first bore portion remote from the mouth, and a receiving aperture for receiving a fishing line which is in the bore closure portion and which enables the fishing line to be connected to the spring member. The second bore may have a first diameter and a second diameter, wherein the first diameter is larger than the second diameter. The second bore may have an elliptical cross section, or the second bore may have a circular cross section with indentations across a chord of the circular cross section which reduce the second diameter of the bore. Therefore, the spring may be rotated within the receiving formation to select the first or second mode of use. The spring may sit within the second bore in the first diameter in the second mode of use, where the spring is not squeezed and the weight is retained, and the spring may sit within the second bore in the second diameter in the first mode of use, where the spring is squeezed and the weight is released.

The device may be one in which the spring member comprises first and second end portions, in which the first and second end portions form a closure in the first position of the spring member, and in which the spring member is squeezable to the second position and thereby to cause the first and second end portions to move away from each other in order to allow the weight to be released from the device. The device may be one in which, in the first position of the spring member, the first and second end portions overlap each other. Other constructions may be employed so that, in the first position of the spring member, the first and second end portions may be separated by a gap which is such that it does not enable the weight to be released from the device.

The spring member may comprise a length of spring material which is bent back on itself. The spring member may be made of metal or a plastics material. Typically, the spring member will be a circular cross section. Also typically, the spring member will be of a narrow circular cross section. The spring member may be a spring wire.

The device may comprise a first connecting formation for enabling the weight to be connected to the device. The first connecting formation may comprise a closed loop on the spring member. The first connecting formation may be other than a closed loop. The first connecting formation may be positioned on the spring member or elsewhere on the device.

The device may comprise a second connecting formation for enabling a hook to be connected to the device. The second connecting formation may be a closed aperture. The second connecting formation may comprise a closed loop on the spring member. The second connecting formations may be other than a closed loop. The second connecting formation may be positioned on the device other than on the spring member.

The device may be one in which the closed loop is formed by a coil portion of the spring member.

The device may include the weight and/or a hook. The device may be manufactured and sold with or without the weight and/or the hook.

The device may be sold in assembled form or it may be sold in the form of a kit of parts.

Embodiments of the invention will now be described solely by way of example and with reference to the accompanying drawings in which:
Figure 1 is a cut-away view through a device of the present invention, with the device being in a first mode of use and retaining a weight;
Figure 2 is a view like Figure 1 but shows the device releasing the weight;
Figure 3 is a sectional view through the device as shown in Figure 1;
Figure 4 is sectional view of the device as shown in Figure 2;
Figure 5 is a longitudinal sectional view like Figure 3 but shows the device in the second mode of use;
Figure 6 is a longitudinal sectional view which is like Figure 4 but shows the device in the second mode of use;
Figure 7 shows perspective view of an example of a device of the present invention.
Figure 8 illustrates the use of the device prior to a fish being caught; and
Figure 9 is a view like Figure 9 but shows how the device operates to enable a weight to be released when a fish has been caught on a fishing hook.

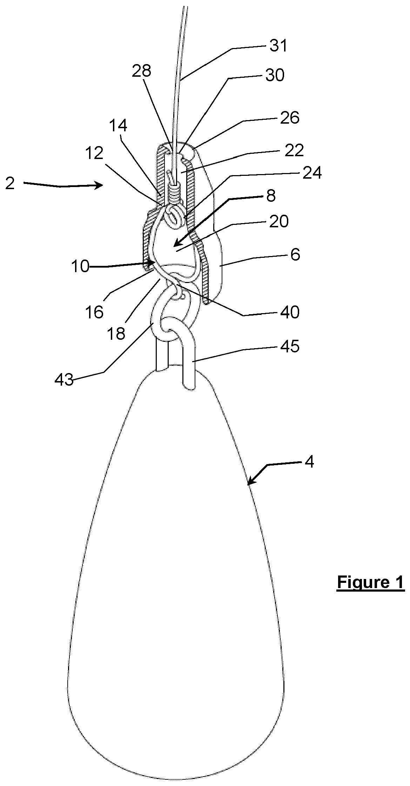

Referring to Figures 1-6, there is shown a device 2 for use in angling for releasably or non-releasably retaining a weight 4. The device 2 comprises a body portion 6 and a receiving formation 8 in the body portion 6. A spring member 10 is in the receiving formation 8.

The receiving formation 8 is longitudinally slidable over the spring member 10. Also, the receiving formation 8 is rotatably slidable over the spring member 10 in order to cause the spring member 10 to function in a first mode of use or a second mode of use, and with an angler always being able to choose between the first mode of use or the second mode of use.

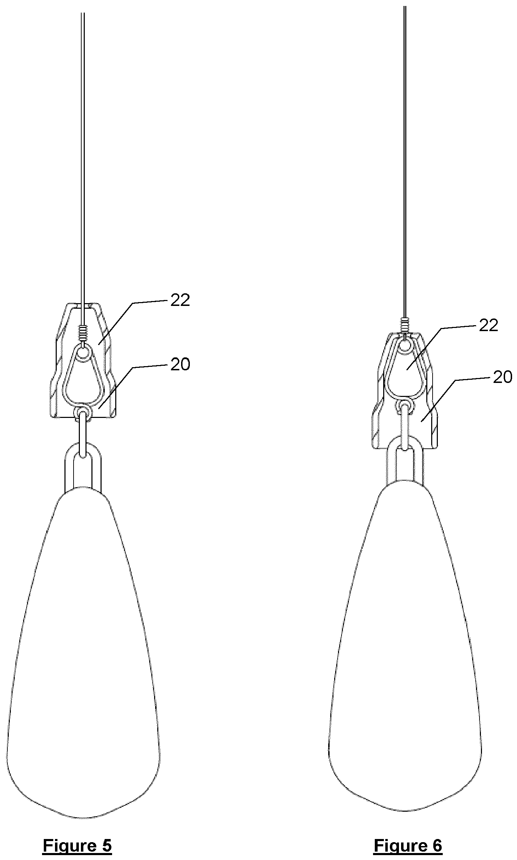

The first mode of use is shown in Figures 1-4. The second mode of use is shown in Figures 5-6.

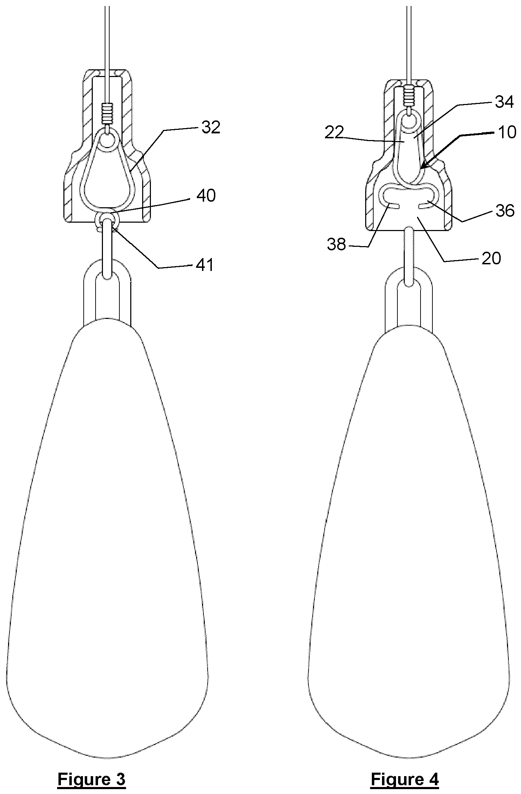

As shown in Figures 1-4, in the first mode of use, the spring member 10 has a first longitudinal position in the receiving formation 8 and which is such as to cause the weight 4 to be retained by the spring member 10. This first longitudinal position is shown in Figures 1 and 3.

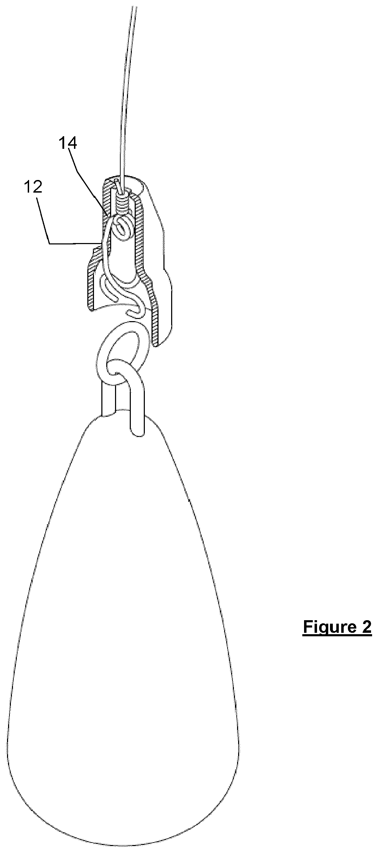

In the first mode of use, the spring member 10 has a second longitudinal position in the receiving formation 8 and which is such as to cause the weight 4 to be releasable from the spring member 10. This second longitudinal position is shown in Figures 2 and 4.

In the second mode of use, both the first and second longitudinal positions of the spring member 10 in the receiving formation 8 are such as to cause the weight 4 to be retained by the spring member 10. In the second mode of use, Figure 5 shows the spring member 10 in the first longitudinal position in the receiving formation 8, and Figure 6 shows the spring member 10 in the second longitudinal position in the receiving formation 8.

The receiving formation 8 comprises guide means 12 for guiding the receiving formation 8 as the receiving formation 8 slides longitudinally over the spring member 10 in order to cause the spring member 10 to move from the first position to the second position. The guide means 12 enables the receiving formation 8 to slide longitudinally smoothly and under control over the spring member 10. The guide means 12 in the receiving formation 8 comprises a groove 14. The spring member 10 slides in the groove 14.

As can best be appreciated from a comparison of Figures 3 and 4, the spring member 10 has a first dimension 32 in the first position shown in Figure 3 and a second dimension 34 in the second position shown in Figure 4. The second dimension 34 is smaller than the first dimension 32. The spring member 10 is closed in the first dimension 32, and is open in the second dimension 34.

The device 2 is one in which the receiving formation 8 comprises a bore 16. The bore 16 comprises a mouth 18. A first bore portion 20 of a first diameter extends from the mouth 18. A second bore portion 22 extends from the end of a first end portion 24 remote from the mouth 18. The second bore portion 22 is adjacent to and of a smaller diameter than the diameter of the first bore portion 20. A bore closure portion 26 doses an end 28 of the second bore portion 22 remote from the end 24 of the first bore portion 20 remote from the mouth 18. There is a receiving aperture 30 for a fishing line 31 which is in the bore closure portion 26 and which enables the fishing line to be connected to the spring member 10. First bore portion 20 has a generally circular horizontal cross section, whereas bore 22 has a first and second diameter, with the first diameter being larger than the second diameter. Figures 5 and 6 show second bore portion 22 having a first diameter and Figures 3 and 4 show second bore portion 22 having the second diameter. Second bore portion 22 could have an elliptical cross section or have a circular cross section with indentations across a chord of the circular cross section.

The spring member 10 comprises first and second end portions 36, 38 respectively. The first and second end portions 36, 38 form a closure 40 in the first position of the spring member 10, as can best be appreciated from Figure 3. The spring member 10 is squeezable to the second dimension 34 as can best be appreciated from Figure 4. In the second dimension 34, the first and second end portions 36, 38 move away from each other in order to allow the weight 4 to be released from the device 2. As shown in Figures 1 and 3, in the first position of the spring member 10, the first and second end portions 36, 38 overlap each other. In alternative embodiments of the invention, the device 2 may be such that the first and second end portions 36, 38 are level with each other or overlap by different amounts.

The spring member 10 comprises a length of spring material which is bent back on itself as shown. The spring material may be a strip of wire which is of narrow circular cross section.

The device 2 comprises a first connecting formation 41 for enabling the weight 4 to be connected to the device 2. The first connecting formation 41 comprises a closed loop on the spring member 8.

The device 2 comprises a second connecting formation 43 for enabling a hook 45 to be connected to the device 2. The second connecting formation 43 comprises a loop on the spring member 10. The loop is formed by a coil portion of the spring member 10 as shown.

In use of the device 2, the receiving aperture 30 enables the fishing line 31 to be connected to the spring member 10. The fishing line 31 may be a main fishing line or an auxiliary fishing line in dependence upon the type of angling being undertaken by an angler.

Figures 5 and 6 show device 2 in the second mode of use. Spring 10 has been rotated 90 degrees about a vertical axis defined through first and second bore portions 20 and 22 as compared to Figures 3 and 4. In Figures 5 and 6, second bore portion 22 is wider than in Figures 3 and 4.

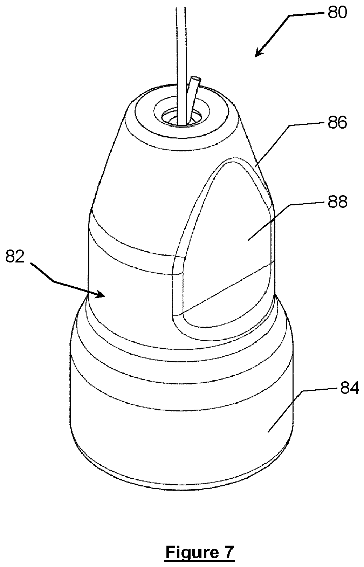

Figure 7 shows an example of a device according to the present invention generally indicated 80. Device 80 comprises an outer wall generally indicated 82 which defines within a bore as previously described. A first wall section 84 defines a first bore portion and a second wall section 86 defines a second bore portion, as previously described. First wall section 84 and second wall section 86 have generally circular cross sections. However, second wall section 86 comprises opposed indentations 88 across a chord of the circular cross section. Therefore, second wall section 86 defines a second bore portion having at least a first and second diameter, wherein a smaller second diameter extends between opposed indentations 88 and a larger first diameter is defined perpendicular to the second diameter and extends parallel to the plane of the indentations 88.

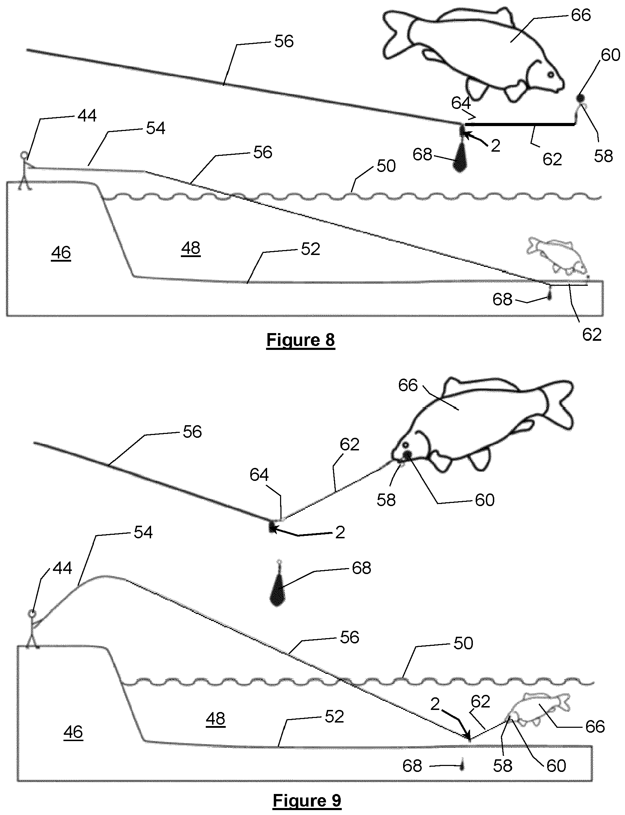

Referring now to Figures 8 and 9, there is shown in schematic form how the device 2 of the present invention may be used in angling. In Figure 7, there is shown an angler 44 fishing from a bank 46 of a river or lake 48 comprising water 50 and a water bed 52. The angler 44 is shown using a fishing rod 54 having a fishing line 56. The fishing line 56 is attached to the device 2. A fishing hook 58 has bait 60. The fishing hook 58 is shown attached to the device 2 by fishing line 62 and a connecting ring arrangement 64. A fish 66 is shown approaching the bait 60. in Figure 9, the hook 58, the bait 60, the device 56 and the fish 66 have been shown in enlarged form above the main part of Figure 9 in order for the various parts more easily to be seen.

Figure 10 is the same as Figure 9 except that the fish 66 has taken the bait 60 and the hook 58. As the fish 66 struggles against being landed by the angler 44, a weight 68 attached to the device 2 may cause the hook 58 in the mouth of the fish 66 to damage the mouth of the fish 66. Figure 10 shows in small and enlarged form how the fish 66 is able to pull on the fishing line 62 and cause the spring member 10 to move from the first position shown in Figures 1 and 3 to the second position shown in Figures 2 and 4 and thereby enable the weight 68 to be released from the device 2. Thus, the device 2 enables the weight 68 to be released from the hook 58.

If the angler 44 were to decide that the device 2 should be used in its second mode of use, then the weight 68 would remain permanently attached to the device 2 as shown in Figures 5-8.

The device of the present invention is advantageous in enabling an angler to decide whether or not to release the weight. Depending upon an angling situation, it may be beneficial to release or to retain the weight. The device is able to be assembled in two separate configurations, with one configuration giving a first mode of use which allows the weight to be released, and the other configuration giving a second mode of use which prevents the weight from being released.

In a fishing situation where the angler considers that there is a risk of the weight becoming caught in underwater obstacles, such as submerged tree branches or aquatic weed beds, the angler can choose the configuration and the first mode of use where the device will release the weight once a fish is hooked. This will reduce the possibility of the weighted line being caught in the underwater obstacles, which can then result in the line becoming trapped or breaking as a result of abrasion and the angler failing to land the fish. In a fishing situation where the angler considers that there is little or no risk of the weight becoming caught in underwater obstacles, the angler can choose the other configuration and the second mode of use where the device will not release the weight. The advantage of this configuration is that it prevents leaving discarded weights in waters being fished, for example lakes or rivers. Also, anglers do not need to replace the discarded weights, which can become costly over a period of time.

It is to be appreciated that the embodiments of the invention described above with reference to the accompanying drawings have been given by way of example only and that modifications may be effected. Thus, for example the spring member 10 may be constructed with different first and second end portions 36, 38. Other constructions for the spring member 10 may be employed. The shape of the body portion 6 may vary. The fishing line 56 may be connected to another part of the device 2. The device 2 may be used with various types of angling equipment and in various angling conditions. Individual components shown in the drawings are not limited to use in their drawings and they may be used in other drawings and in all aspects of the invention. The invention also extends to the individual components mentioned and/or shown above, taken singly or in any combination.

## Claims

1. A device (2) for use in angling for releasably or non-releasably retaining a weight (4), which device comprises:
(i) a body portion (6);
(ii) a receiving formation (8) in the body portion (6); and
(iii) a spring member (10) in the receiving formation (8),
and wherein:
(iv) the receiving formation (8) is longitudinally slidable over the spring member (10);
(v) the receiving formation (8) is rotatably slidable over the spring member (10) in order to cause the spring member (10) to function in a first mode of use or a second mode of use, and with an angler always being able to choose between the first mode of use or the second mode of use;
(vi) in the first mode of use, the spring member (10) has a first longitudinal position in the receiving formation and which is such as to cause the weight (4) to be retained by the spring member (10);
(vii) in the first mode of use, the spring member (10) has a second longitudinal position in the receiving formation and which is such as to cause the weight (4) to be releasable from the spring member (10); and
(viii) in the second mode of use, both the first and second longitudinal positions of the spring member (10) in the receiving formation (8) are such as to cause the weight (4) to be retained by the spring member (10).

2. A device according to claim 1 in which the receiving formation (8) comprises guide means (12) for guiding the receiving formation (8) as the receiving formation (8) slides longitudinally over the spring member (10) in order to cause the spring member (10) to move from the first position to the second position.

3. A device according to claim 2 in which the guide means (12) in the receiving formation (8) comprises a groove (14), and in which the spring member (10) slides in the groove (8).

4. A device according to any one of the preceding claims in which the spring member (10) has a first dimension in the first position and a second dimension in the second position, and in which the second dimension is smaller than the first dimension.

5. A device according to any one of the preceding claims in which the receiving formation (8) is a bore (16) which comprises a mouth (18), a first bore portion (20) of a first diameter extending from the mouth (18), a second bore portion (22) of a second diameter which extends from the end (24) of the first bore portion (20) remote from the mouth (18) and which is of a smaller diameter than the diameter of the first bore portion (20), and a bore closure portion (26) which closes an end (28) of the second bore portion (22) remote from the end (24) of the first bore portion (20) remote from the mouth (18), and a receiving aperture (30) for receiving a fishing line which is in the bore closure portion (26) and which enables the fishing line to be connected to the spring member (10).

6. A device according to any one of the preceding claims in which the spring member (10) comprises first and second end portions (36,38), in which the first and second end portions (36,38) form a closure (40) in the first position of the spring member (10), and in which the spring member (10) is squeezable to the second position and thereby to cause the first and second end portions (36,38) to move away from each other in order to allow the weight (4) to be releasable from the device (2).

7. A device according to claim 6 in which, in the first position of the spring member (10), the first and second end portions (36,38) overlap each other.

8. A device according to any one of the preceding claims in which the spring member (10) comprises a length of spring material which is bent back on itself.

9. A device according to any one of the preceding claims in which the device (2) comprises a first connecting formation (41) for enabling the weight (4) to be connected to the device (2).

10. A device according to claim 9 in which the first connecting formation (41) comprises a closed loop on the spring member (10).

11. A device according to any one of the preceding claims in which the device (2) comprises a second connecting formation (43) for enabling a hook (45) to be connected to the device (2).

12. A device according to claim 11 in which the second connecting formation (43) is a closed loop on the spring member (10).

13. A device according to claim 12 in which the closed loop is formed by a coil portion of the spring member (10).

14. A device according to any one of the preceding claims and including the weight (4).

15. A device according to any one of the preceding claims and including a hook (45).

## Amended claims

### Amended claims in accordance with Rule 137(2) EPC.

1. A device (2) for use in angling for releasably or non-releasably retaining a weight (4), which device comprises:
(i) a body portion (6);
(ii) a receiving formation (8) in the body portion (6);
(iii) a spring member (10) in the receiving formation (8); and
(iv) the receiving formation (8) is longitudinally slidable over the spring member (10);
(v) the receiving formation (8) is rotatably slidable over the spring member (10) in order to cause the spring member (10) to function in a first mode of use or a second mode of use, and with an angler always being able to choose between the first mode of use or the second mode of use;
(vi) in the first mode of use, the spring member (10) has a first longitudinal position in the receiving formation and which is such as to cause the weight (4) to be retained by the spring member (10);
(vii) in the first mode of use, the spring member (10) has a second longitudinal position in the receiving formation and which is such as to cause the weight (4) to be releasable from the spring member (10); **characterised in that:**
(viii) in the second mode of use, both the first and second longitudinal positions of the spring member (10) in the receiving formation (8) are such as to cause the weight (4) to be retained by the spring member (10).

2. A device according to claim 1 in which the receiving formation (8) comprises guide means (12) for guiding the receiving formation (8) as the receiving formation (8) slides longitudinally over the spring member (10) in order to cause the spring member (10) to move from the first position to the second position.

3. A device according to claim 2 in which the guide means (12) in the receiving formation (8) comprises a groove (14), and in which the spring member (10) slides in the groove (8).

4. A device according to any one of the preceding claims in which the spring member (10) has a first dimension in the first position and a second dimension in the second position, and in which the second dimension is smaller than the first dimension when in the first mode of use.

5. A device according to any one of the preceding claims in which the receiving formation (8) is a bore (16) which comprises a mouth (18), a first bore portion (20) of a first diameter extending from the mouth (18), a second bore portion (22) of a second diameter which extends from the end (24) of the first bore portion (20) remote from the mouth (18) and which is of a smaller diameter than the diameter of the first bore portion (20), and a bore closure portion (26) which closes an end (28) of the second bore portion (22) remote from the end (24) of the first bore portion (20) remote from the mouth (18), and a receiving aperture (30) for receiving a fishing line which is in the bore closure portion (26) and which enables the fishing line to be connected to the spring member (10).

6. A device according to any one of the preceding claims in which the spring member (10) comprises first and second end portions (36,38), in which the first and second end portions (36,38) form a closure (40) in the first position of the spring member (10), and in which the spring member (10) is squeezable to the second position and thereby to cause the first and second end portions (36,38) to move away from each other in order to allow the weight (4) to be releasable from the device (2).

7. A device according to claim 6 in which, in the first position of the spring member (10), the first and second end portions (36,38) overlap each other.

8. A device according to any one of the preceding claims in which the spring member (10) comprises a length of spring material which is bent back on itself.

9. A device according to any one of the preceding claims in which the device (2) comprises a first connecting formation (41) for enabling the weight (4) to be connected to the device (2).

10. A device according to claim 9 in which the first connecting formation (41) comprises a closed loop on the spring member (10).

11. A device according to any one of the preceding claims in which the device (2) comprises a second connecting formation (43) for enabling a hook (45) to be connected to the device (2).

12. A device according to claim 11 in which the second connecting formation(43) is a closed loop releasably attached to the spring member (10).

13. A device according to any one of the preceding claims in combination with the weight (4).

14. A device according to any one of the preceding claims in combination with the hook (45).
